Europäisches Patentamt

European Patent Office

Office européen des brevets

(19)

(11) Publication number: **0 255 213 B1**

# EUROPEAN PATENT SPECIFICATION

(12)

(45) Date of publication of patent specification: **21.08.91**

(51) Int. Cl.⁵: **E04H 17/04, E04H 17/10, E04H 17/08, A01K 3/00**

(21) Application number: **87304940.7**

(22) Date of filing: **03.06.87**

(54) Composite strand fence.

(30) Priority: **01.08.86 US 892042**

(43) Date of publication of application:
**03.02.88 Bulletin 88/05**

(45) Publication of the grant of the patent:
**21.08.91 Bulletin 91/34**

(84) Designated Contracting States:
**BE CH DE ES FR GB IT LI NL SE**

(56) References cited:
**CA-A- 1 195 867      DE-A- 2 414 737**
**US-A- 4 108 070      US-A- 4 182 382**
**US-A- 4 433 831      US-A- 4 465 263**

(73) Proprietor: **CENTAUR FENCING SYSTEMS INC.**
**P.O. Box 2788**
**Muscle Shoals Alabama 35661(US)**

(72) Inventor: **Robbins, Edward S.**
**459 North Court**
**Florence Alabama(US)**

(74) Representative: **Raynor, John et al**
**W.H. Beck, Greener & Co 7 Stone Buildings**
**Lincoln's Inn**
**London WC2A 3SZ(GB)**

## Description

This invention relates to fencing systems and to materials which comprise the various components of such systems.

Fence materials are generally selected on the basis of initial and estimated maintenance costs, durability, strength, safety and appearance. The fencing material that has been most widely used due to its low cost of installation and up-keep is metal wire, both smooth and barbed.

However, wire fencing, and particularly barbed wire fencing suffers from the disadvantage that it can cause painful, unsightly and life-threatening injury to valuable livestock, particularly when the stock becomes agitated or disturbed, as frequently happens during storms, or in the event predators penetrate the area in which the livestock are confined. The problem is compounded by the fact that wire fencing, whether it be barbed wire or smooth wire, is very thin and difficult to see and, as a result, animals are correspondingly more likely to contact wire fences than other more visible fences, such as wood rail fences. Wire fencing is also generally regarded as having poor aesthetic qualities, and it tends to rust or corrode after a few years of service.

For enclosing or confining certain types of livestock, such as thoroughbred race horses or animals of similar value, wood fences have also been employed. While pleasing to the eye and relatively safe, wood fences are nevertheless expensive to install and maintenance costs are particularly high. Wood fences also have the disadvantage of causing serious and, sometimes, fatal injuries to animals.

In an effort to retain the visibility and pleasing aesthetics of wood fencing, and the low cost and maintenance of wire fencing, it has been proposed to construct fences of wire webbing with wooden boards meshed therein. However, the durability of these fences is limited again by cost and by the tendency of the wood to weather and rot.

It is also known in the prior art to use plastic rather than wood to increase durability and to decrease the cost of fencing. For example, U.S. Patent No. 3,877,140 discloses a picket fence composed of metal and plastic. The fence described there is well suited for applications not requiring a great deal of strength, such as for snow fencing, but is not particularly suited to applications where strength is of considerable importance, such as for the confinement of livestock.

Despite such attempted improvements, the most common practice still is to utilize plain or barbed wire wherein single strands of wire are, in effect, substituted for wooden rails, slats, and the like. One other advantage of wire fencing is that it may be made to be electrically conductive so as to provide low voltage electrical shocks on contact. U.S. Patent No. 3,669,413, for example, discloses a metallic electrical fence comprising spaced, insulated fence posts supporting, via L-shaped tabs, one or more elongated current-carrying uninsulated conductor wires supplied with electrical current from a remote source.

In U.S. Patent No. 3,516,643, a fence for livestock use is disclosed utilizing a plurality of non-electrified wires in combination with a single, uncoated electrically-conductive wire supported on insulators attached via extension means to fence posts.

U.S. Patent No. 3,350,066 discloses still another wire fence construction wherein spaced, weighted fence posts support a plurality of horizontal, non-coated wires which may be electrified or non-electrified. A plurality of spring-biased wire engaging hooks tightly clamp the wires to the fence posts.

In U.S. Patent No. 3,223,796, an insulated, electrically-conductive fence wire structure is described wherein a single strand of wire is supported between spaced fence posts. The reference discloses a copper or other highly-conductive wire loosely encased in a rubber or other flexible insulating material sleeve. Since the patent discloses the use of only a single wire and since the wire is made of a relatively soft metal (e.g., copper), serious doubts exist as to its usefulness in confining animals, particularly large ones (such as horses or cattle). The reference also discloses that the conductive wire may be covered with a substantially solid insulation coating 0.36 to 0.5 cm (1/8 to 3/16 of an inch) in thickness. The reference shows "conventional post connectors" that appear to fixedly hold the wire to the posts.

Also representative of known wire fence installations is a booklet published by United States Steel Corp. in 1980 entitled "How to Build Fences With USS Max-10 200 High Tensile Fence Wire". The booklet describes wire fence constructions utilizing varying numbers of smooth uncoated high-tensile wires connected to spaced fence posts by standard staple-type fasteners. Electrified versions are also described, utilizing insulated fasteners and short sections of tubular post insulators that loosely surround the wires.

Taking a different approach to conventional wire fencing, U.S. Patent No. 4,111,399 discloses a fence comprising spaced fence posts supporting a series of horizontal as well as vertical strands of heavy gage wire. According to the reference, intermediate horizontal strands and all of the vertical strands are of a common gauge, while the bottom and top horizontal strands are of a heavier gauge. In addition, the vertical spacing from top to bottom is varied, the lower horizontal strands closer together than the upper horizontal strands. All horizontal strands are secured to the posts using standard staple-type fasteners.

All of the above prior art wire fence constructions are unsatisfactory from the stand point that they lack aesthetic appeal, and they are oftentimes difficult to detect by livestock, horses or other animals by reason of the very small cross-sectional area of the individual wires. As previously indicated, the poor visibility associated with plain or barbed wire fences can lead to painful injury to the animals.

In my earlier U.S. Patent 4,465,263, a composite metal and plastic fence system is disclosed which retains the visibility and attractiveness of wood fencing, but which has the high strength, low cost, low maintenance characteristics of wire fencing. The fence utilises corner posts implanted in the ground, with intervening fence posts. A flexible fencing member comprising plastic webs reinforced by a pair of wires with high tensile strength extend between the posts, and are slidably coupled to the corner posts. Means are provided for tensioning the fencing material between a corner post. The reinforcing wires are located at the upper and lower edges of the plastic web.

In the present invention, corner posts are employed which have a foot portion orientated at an angle such as to resist an inward force applied to a corner post, in a fencing assembly.

Accordingly, the present invention provides a fence system comprising:

at least one corner post assembly, each said corner post assembly, comprising at least one corner post member, each corner post member including a fence post adapted to be partially implanted in the ground, and a foot portion adapted to be coupled to the fence post;

optionally at least one gate post assembly, each gate post assembly comprising first and second gate post members, each gate post member including at least one fence post adapted to be partially implanted in the ground, and a gate post support;

at least one elongate length of flexible fencing comprising a plastic coated high tensile wire or fibre,

means for coupling each of said at least one lengths of flexible fencing material at each end thereof to a gate post member or to a fence post and means for slidably coupling the flexible fencing material to at least one of the said corner post members; and

at least one tensioning means, for tensioning each of said at least one lengths of fencing material, provided on each length of flexible material,

whereby the fencing material may be tensioned between the coupled ends thereof, characterised in that the foot portion of each said corner post member is orientated at an angle such as to resist an inward force applied to the corner post thereby to maintain its respective fence post in a substantially upright disposition against the force exerted thereon from the tensioned fencing material.

Various conventional techniques may be employed to encase the core member within the plastic sheath. In one exemplary embodiment, the plastic is extruded onto the core material so that the plastic is fixed to the strand, i.e., there is no relative sliding motion therebetween. Extruding plastic coatings onto wire strands is not in itself new, and reference is made to U.S. patent No. 4,182,382, which discloses a representative prior art plastic extruding technique.

The thickness of the applied plastic coating or sheath is such that the outside diameter of the composite strand is preferably from at least about .220 inch to about .750 inch (0.56 to 1.9cm).

In one embodiment, the present invention relates to a fence system wherein a plurality of such composite strands extend between a plurality of fence posts to create a highly visible, safe and attractive barrier particularly well suited for livestock confinement.

A variety of cross-sectional shapes are contemplated for the composite strand. For example, the plastic sheath or coating may be applied so as to impart to the overall strand a circular, oval, or semicircular cross-section, but other shapes may be employed with equal effectiveness.

The composite strand be electrically non conductive, conductive, or selectively conductive. In one embodiment, the composite strand may be made conductive by the addition of carbon black particles to the plastic sheath composition prior to extrusion, or by co-extruding a conductive stripe on the surface of the plastic sheath. Other methods, well known in the art, may also be employed.

The composite strand is preferably predominantly white and the conductive stripe black, but, other configurations are contemplated, such as black conductive stripes with a variety of other colors, fluorescent or non-fluorescent, reflective or non-reflective, etc., for enhancing visibility.

Preferably fasteners are employed for securing the coated wire to the fence post in such a manner that they are essentially prevented from any vertical movement within the confines of the fastener or bracket, but are permitted to move horizontally therein to compensate for expansion and/or contraction due to variations in temperature, and to allow tensioning of the wires at the end posts. Staple-type or other similar fastening hardware may be used, so long as the fasteners conform generally to the cross-sectional shape of the composite strand so as to substantially limit vertical displacement of the composite strands. Stop elements may be employed to limit penetration of the fasteners into the fence posts to ensure horizontal slidability of the composite strand.

It will be appreciated that the composite strand combines the high strength, low cost characteristics of wire with the high visibility, safety, and aesthetic features of wood.

A second aspect of the present invention relates to a method of forming a fence line layout and the fence line system formed thereby, utilising the fence system of the invention. The fence line formed in accordance with this aspect of the present invention is comprised of a plurality of fence post members that are disposed in an array so as, for example, to enclose a given area of land. A fencing material which may for example be one of the kind described above is slidably coupled to each of the posts. The fence material is comprised of at least two wires or fibers, having a high tensile strength, ensheathed in a plastic casing, the plastic casing both enclosing the wires or fibers and retaining them in a fixed vertical separation. The wire or fiber may be of any diameter suitable for the strength required in service. In many applications, for example, 8, 12 1/2, or 16 gauge wire or fiber may suffice. Between the wires or fibers, the plastic casing assumes the form of a sheet or web so that the cross section of a strip of fencing material according to one embodiment of the third aspect of the present invention, taken perpendicular to the length of any pair of adjacent wires, is approximately dumbbell shaped. The web itself may have any thickness but is preferably in the range of about 30 mils to 100 mils (0.75 to 2.5 mm).

The fencing material is slideably mounted on the fence posts with the aid of brackets so that the wires or fibers run the length of the fence. A fence so constructed has the advantages of high visibility, good strength, and relatively low cost of purchase, installation, and upkeep. Also, such a fence will neither cut nor gouge the hides of valuable livestock and can be used for the close confinement of such animals. This is extremely important when the fence line layout is being used to confine livestock, such as thoroughbred racehorses, where any damage to the legs or any other part of the animals' bodies possibly resulting in death or serious injury must be prevented.

The fence line layout of this aspect of the present invention most preferably includes at least one termination assembly or gate post assembly. Each of the gate post assemblies includes at least a first and, preferably, also a second gate post member. Each of the gate post members includes at least one fence post. The gate post assembly also includes a gate post support assembly. This gate post support assembly includes both vertical and horizontal supports which are provided, respectively, about and between the fence posts which make up each gate post. In the preferred embodiment, the vertical and horizontal supports of the gate post support assembly are provided underground and are formed from concrete. Preferably, the concrete supports are provided at least 6 inches (15 cm) below the surface of the enclosure to avoid possible damage to the animals and preferably extend below the frost line of the region. The gate post support assembly further includes a support element placed between and, preferably, immediately adjacent the top of the fence posts making up the gate post. A length of fencing material is affixed at each end thereof to a gate post member, and is slideably mounted to each of the fence posts disposed so as to form the fence line layout. At least one tensioning assembly is further provided along each length of the fencing material, preferably midway along the length thereof. The tensioning assembly for the fence line layout includes tensioning means provided between each of the wire fibers in each length of the fencing material. In the preferred embodiment, the tensioning means are rachet members. The tensioning means as well as the slideable fence post attachment of the fencing material enable the fencing material to be pulled taut. The tensioning assembly is further provided with a cover (preferably in three pieces) for protecting the tensioning means from the weather or tampering as well as for protecting the animals from injury. Each end of the cover is provided with an aperture so as to enable the fencing material to be passed therethrough but excluding the weather and insects, such as bees, which may respectively damage the rachet members, hinder the use thereof and injure the animals.

The essential feature of the present invention is the provision of a concrete foot member on corner posts of the fence line. As used herein, corner post refers to those fence posts along the fence line that are located at a corner of the enclosure or at any point along the fence line where the curvature of the fence line deviates fairly significantly from zero (e.g., $10°$ or more). The foot member which is provided on each of the aforementioned corner posts includes a block member which extends inwardly relative to the fence line layout. In the preferred embodiment, the foot member is formed from concrete and is preferably provided at least 6 inches (15 cm) below the ground surface of the enclosure and preferably extends below the frost line of the region. The foot member so disposed resists forces which are applied to the fence post of the corner post when the fencing material is tensioned by the tensioning assembly. The fence line so formed provides a safe and sturdy enclosure for livestock. In particular, if an enclosed animal should collide with a fence line that is slideably mounted and tensioned, in accordance with this invention, the fencing material will distort and absorb, much as a rubber band would, the energy of the collision.

Fences formed in accordance with the present invention can include any number of wires or fibers encased in the plastic material as well as any number of lines of plastic material disposed vertically along the fence post and surrounding the enclosure. For example, a fence according to the present invention can be comprised of two, three, or even more wires or fibers encased in the plastic web with a two wire or fiber fence strand having a width of about 2.5 inches (6.3 cm) and a three wire fence strand having a width of approximately 5.5 inches (14 cm). Similarly, a fence formed in accordance with the present invention can be comprised of two, three, or more lines of plastic material provided vertically along the fence post so as to surround the enclosure.

The various aspects of the present invention are illustrated in the accompanying drawings, in which:-

FIGURE 1 is a perspective view of a bracket element for supporting an elongated web of fencing material and at least one electrically conductive composite strand;

FIGURE 2 is a perspective view of part of wire fence system components according to an exemplary embodiment of this invention including a plurality of composite strands attached to a fence post;

FIGURE 3 is a cross-sectional view of a composite strand;

FIGURES 4 and 5 are cross-sectional views of alternative cross-sectional profiles for a composite strand;

FIGURES 6,7 and 8 are sectional views illustrating staple fastener members for use with round, oval and semi-circular composite strands;

FIGURE 9 shows a perspective of an alternative fastener member for attaching a composite strand to a fence post: and

FIGURE 10 is a perspective view of an electrically conductive composite strand.

FIGURE 11 is a schematic plan view of a fence line layout in accordance with this invention.

Figure 12 is a plan view of a gate post assembly for use in the fence system in accordance with the present invention;

Figure 13 is a bottom plan view of the gate post assembly of Figure 12;

Figure 14 is a top plan view of the gate post assembly of Figure 12;

Figure 15 is a top plan view of a corner post assembly in accordance with one embodiment of the present invention;

Figure 16 is a side plan view of the corner post of Figure 15;

Figure 17 is a top plan view of the corner post of Figure 15; and,

Figure 18 is a plan view of a tensioning assembly.

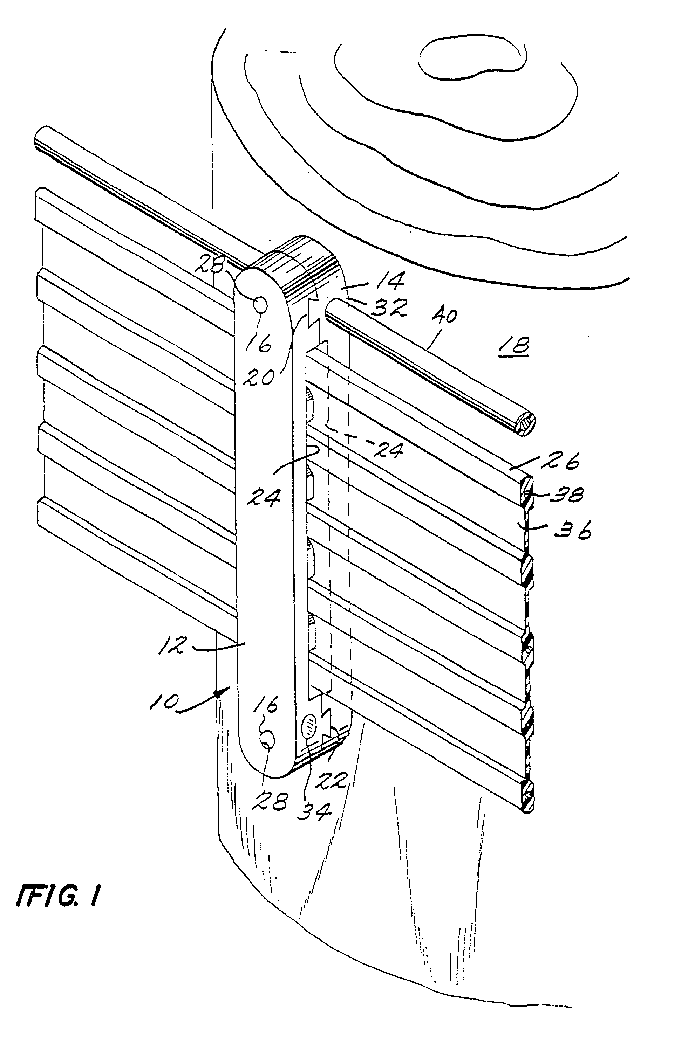

Referring now to the drawings wherein like numerals designate corresponding parts throughout the several views, there is shown in Figure 1 a portion of a composite metal and plastic fence, and an associated bracket 10.

The bracket 10 is formed with two bracket elements 12 and 14, each of which has openings 16 for receiving fastening nails to secure the elements to the fence post. On the inner face of each of the ends of the bracket element 12 and 14, a dove tail joint is provided in the form of a sloped wall channel 20 at one end, and a complimentary tongue 22 at the opposite end. Thus, the tongue 22 of one of the bracket elements will fit into the channel 20 of the other bracket element, as illustrated. With this arrangement, separation of the bracket elements 12 and 24 will be prevented in the event that the bracket 10 becomes separated from the fence post 18.

The fence rail material 26 comprises plastic in the form of flat web portions 36 extending between raised beads or ribs 38, at least some of which encase high-tensile wires. In Figure 1, the upper and lower edge beads and an intermediate bead are shown to encase a reinforcing wire.

The bracket elements 12 and 14 together define an elongated recess 24 which receives the plastic rail 26. It will be understood from my parent application that the bracket 10, when mounted to a fence post 18 by nails or other suitable fasteners 28, will provide vertical support to the rail material 26. At the same time, the rail 26 is free to slide horizontally within the bracket to compensate for expansion and contraction due to variations in temperature, and to enable the rail to be tensioned as desired.

As further illustrated in Figure 1, apertures 32, 34 are provided in each bracket element for receiving a low-voltage conductive wire 40.

Wire 40 is a composite strand comprising an elongate high-tensile strength core 44 member encased in a plastic sheath 42. The strand construction, and the manner in which it is made electrically conductive, is described further hereinbelow.

It will be understood that apertures 32, 34 are sized to permit horizontal sliding movement of the composite strand 40 in the same sense that fence rail 26 is slidably supported in the recess 24 of bracket 10.

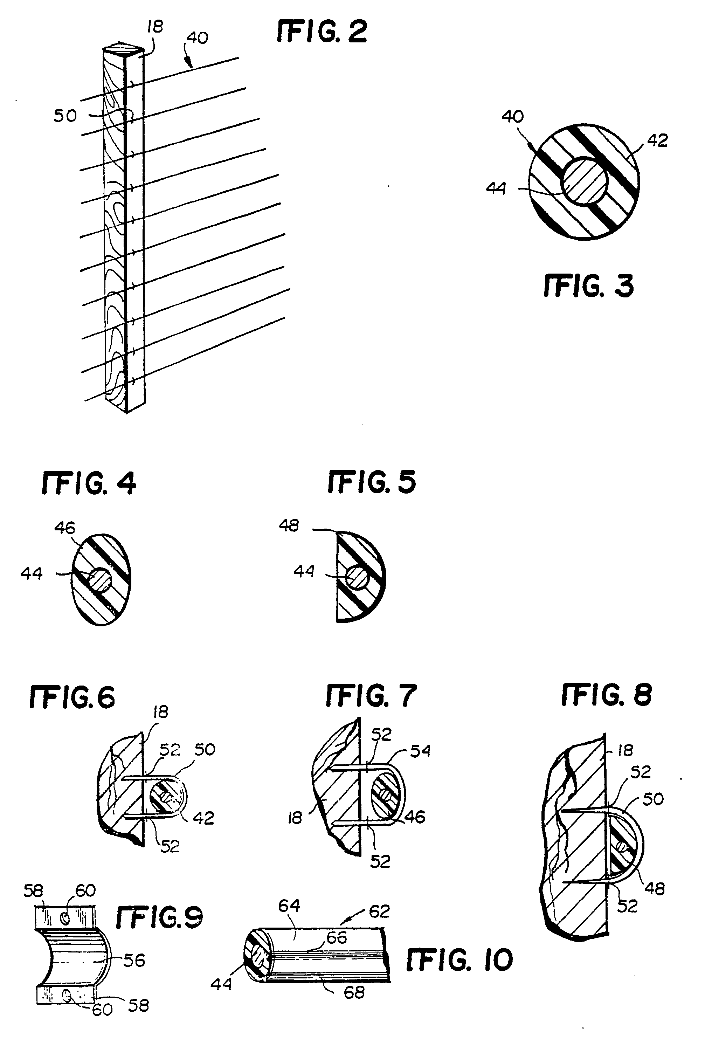

Turning now to Figure 2, an embodiment is shown wherein a plurality of composite strands 40 are themselves utilized as the fence material. As shown, ten such composite strands are arranged vertically on a fence post 18. A fence system so configured creates an effective barrier to animal egress or ingress vis-a-vis the area bounded by the fence. The composite strands also provide a highly-visible barrier which not only enables the livestock to see the fence, but also protects the livestock from injuries caused by contact with the typical wire fence constructions utilized in the past. It will be understood, of course, that while ten composite strands are shown in Figure 2, the number of strands may vary in accordance with the circumstances surrounding the use of the fence. For example, an eight strand fence may be suitable for cattle grazing, while a twelve strand fence may be desired for full grown horses, colts, etc. Of course, smaller animals may require a lesser number of strands. A ten strand fence, on the other hand, offers a versatile design which represents a compromise between the eight and twelve strand fences, but which may, in fact, prove to be effective in all cases.

It will further be understood that the vertical space between adjacent composite strands may be adjusted as required. For example, the vertical spacing between the strands at the lower end of the fence posts may be smaller than the spacing between the upper strands so that smaller domestic or wild animals may be kept out of the enclosed area.

In Figure 3, there is shown a cross-section of a composite strand in accordance with an exemplary embodiment of this invention. The strand 40 is shown to include a high-tensile strength wire 44 encased in a plastic sheath or coating 42 of generally circular cross-section. The high-tensile strength core member 44 may be a conventional 12 ½ gage galvanized of non-galvanized steel wire. It will be understood that 14 ½ or 16 gage wire may also be used, depending upon strength requirements of the fence. In addition, wire cable, glass fiber or synthetics such as polyester or nylon polyester fibers, as well as polypropylene ropes or cables may also be used as the core member in the composite strand.

The plastic sheath or coating 42 which surrounds, or encases, the core member 44 is applied to the core in such a way that no relative sliding movement between the core and the sheath is permitted. In one exemplary embodiment of the invention, the sheath or coating 42 is extruded onto the core member.

In accordance with this invention, the plastic sheath 42 is preferably formed of polyvinyl chloride, polypropylene with rubber added, or other suitable thermoplastic olefin polymers. However, it is specifically contemplated that any plastic or comparable material may be utilized as the sheath.

The outside diameter of the composite strand is preferably between about .220 inch (0.59 cm) and about .500 inch (1.25cm), although it may be as large as about .750 inch (1.9 cm) or larger,. Utilizing a standard wire gage of 12 ½ for the core material 44, it will be appreciated that the plastic sheath 42 should be between about 2 and about 7 times the thickness of the core member for best results.

Figures 4 and 5 illustrate alternative cross-sectional shapes for the composite strand. In Figure 4, the plastic sheath 46 is given an oval cross-section, while in Figure 5, the plastic sheath 48 is given a semi-circular or half-moon cross-section. Both of these alternative embodiments offer highly visible profiles, which are easily seen by livestock. It will be understood that these are only representative of a variety of cross-sectional shapes which may be imparted to the strand by, for example, changing the extrusion die configuration.

Figures 6, 7 and 8 illustrate staple-type fasteners for attaching the variously shaped composite strands to a fence post 18. In Figure 6, a staple-type fastener 50 which conforms closely to approximately half of the circular cross-section of the strand 40 is shown with stop elements 52 which limit penetration of the staple into the fence post to ensure that the composite strand will be able to slide horizontally with respect to the staple and the fence post. At the same time, because the contour of the staple follows the circular cross-section of the strand, through at least 180°, the composite strand is prevented from moving vertically any appreciable distance within the staple member.

In the Figure 7 embodiment, the staple 54 has a shape which conforms, again, to at least half of an oval shaped plastic sheath 46, and is also provided with stop elements which function in the same manner as those described with respect to the staple illustrated in Figure 6.

In Figure 8, a staple 50 of the type used with the circular cross-section strand of Figure 6, is shown in association with a semi-circular or half-moon cross-section strand 48. As will be appreciated from Figure 8, the half-moon cross-section affords a greater degree of surface contact between the strand and the fence post.

In Figure 9 there is shown still another fastening member for use with composite strands as described herein. The body 56 of the fastener is shown to have a semi-circular shape much like the staple 50 in Figure 6 but, rather than penetrating legs and stop elements, the fastener in Figure 9 is provided with laterally-extending flanges 58 provided with aperture 60 for receiving nails or similar fasteners. The body portion 56 may be shaped, of course, in alternative configurations to correspond to the cross-sectional shape of at least a portion of the strand.

Turning now to Figure 10, there is shown a perspective view of a composite strand 62 including an elongated core member 44 encased in a plastic sheath 64 provided with an electrically-conductive stripe 66. The electrically-conductive stripe 66 contains carbon black particles or other similar material, and may be co-extruded with the plastic sheath 64 in a manner well understood by those of ordinary skill in the art. While only one conductive stripe is shown, two or more may be included about the periphery of the strand. Alternatively, the plastic sheath itself may contain carbon black particles or the like. It will be understood that the strand may thus be made entirely or only selectively electrically conductive as desired.

In the event the composite strand is made electrically conductive, fasteners or brackets will be insulated, or alternatively, insulators will be inserted over the strand at the point of engagement between the strand and the brackets or other fasteners. In this regard, the fasteners or brackets may themselves be plastic or coated with plastic or other insulating material.

A second elongated stripe 68, extending parallel to the electrically-conductive stripe 66 is shown in Figure 9, and is designed to provide enhanced visibility of the composite strand. It is further contemplated by this invention that one or more stripes 68 may be fluorescent or contain reflective particles to even further enhance the visibility of the strand.

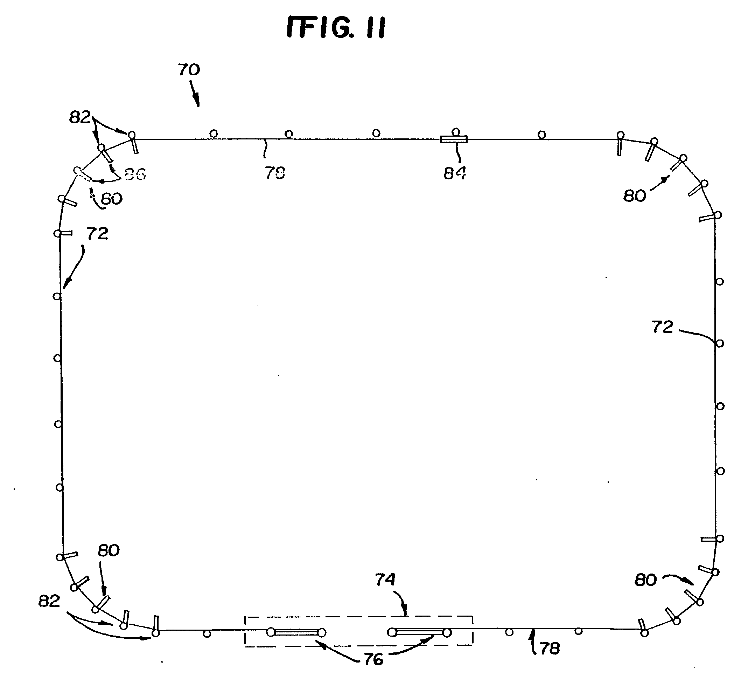

In Figure 11, there is shown a schematic plan view of a fence line layout in accordance with an exemplary embodiment of the invention.

As can be seen, the fence line layout 70 comprises a plurality of fence posts 72 which are partially implanted into the ground and are disposed in an array so as to define an area to be enclosed. The fence line layout 70 includes at least one termination or gate post assembly 74 which preferably includes first and second gate post members 76. Each of the gate post members 76 includes at least one of the fence posts 72. In the preferred embodiment, a length of fencing material, which may preferably be a plurality of composite strands 78 is coupled at ends thereof to the first and second gate post members 78, respectively, of the gate post assembly 74 and are slideably coupled to each of the fence posts 72 that are disposed between the gate post members 76.

While in the illustrated embodiment only one gate post assembly is shown, it is clear that any number of gate post assemblies could be provided about the periphery of the enclosure so as to provide a number of gate openings thereabout. It is also contemplated that the present invention could be utilized to create a termination assembly where there is no gate or entry way, such as the inside fence at a thoroughbred race track.

The fence line layout 70 further includes a plurality of corner assemblies 80 which are provided, preferably, where the fence line deviates substantially from a straight line. In the illustrated embodiment, there are four corner post assemblies, however, any number of corner post assemblies could be provided along the fence line layout 70. Further, in the illustrated embodiment, each of the corner post assemblies comprises five corner posts 82. Of course, any number of corner posts could be provided at each corner post assembly.

The fence line layout 70 is also provided with at least one tensioning assembly 84 for tensioning each of the composite strands of fencing material. It will be understood that any number of tensioning devices may be employed for example, a number equal to the number of composite strands used in the fence system may be used if desired. The tensioning means are preferably located at the termination points of the composite strands.

In the illustrated embodiment, the composite strands 78 extend along the interior of the corner posts 82; however, the composite strands may pass along the exterior of the gate post relative to the enclosed area. As further seen in Figure 11, each of the corner posts 82 is provided with a foot portion which extends inwardly relative to the fence line. The foot portion secures and stabilizes the associated corner post 82.

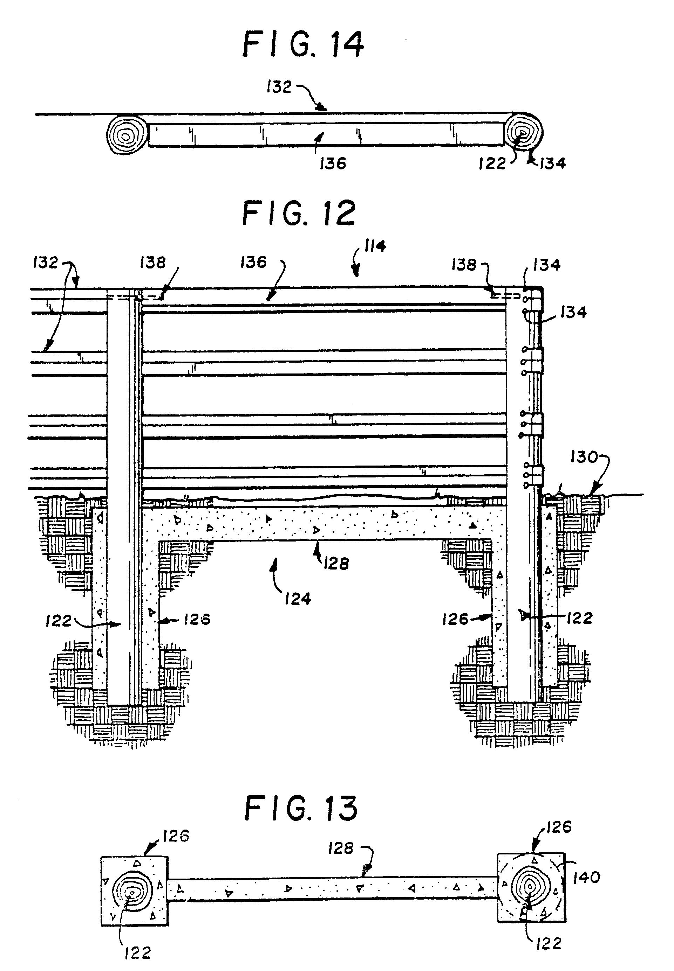

Figure 12 is a side view of one of the gate posts 76 of the preferred gate post assembly 74. The gate post 76 includes first and second fence post 122 which are implanted in the ground in upright fashion so that, in the preferred embodiment, approximately one-half of their length is provided below ground and one-half above ground. The portion of the fence post 122 that is provided below ground is preferably at least partially embedded in a gate post support 124. The gate post support 124 includes two vertically extending portions 126 each surrounding one of the fence post 122 and a horizontal portion 128 which extends between the two vertical portions 126. In the preferred embodiment, the horizontal portion 128 of the gate post support 124 extends along the ground a distance of about 6 inches (15 cm) from the surface 130 of the ground and the upper end of each of the vertical portions 26 of the gate post support 124 terminate a distance of about 6 inches (15 cm) from the surface 130 of the ground. In addition, in the preferred embodiment, the gate post support is formed from concrete.

As can be further seen in Figure 12, fence material 132 is coupled to one of the fence posts 122 of the gate post 76 by suitable fasteners 134 which preferably couple the wires or fibers provided in the fence material 132 to the fence post 122. The fence material 132 so coupled may be provided about the interior or about the exterior of the plurality of fence posts forming the fence line layout 70.

A further support member 136 is also provided for gate post 76. The support member 136 is coupled with suitable fastening means 138, shown in broken lines in Figure 12, to the fence posts 122. Preferably, the support member 136 is provided immediately adjacent the top of each of the fence posts 122 and between the same. The support member 136 may be of any shape and material suitable for spacing and supporting the fence posts 122, but in the preferred embodiment the support member 136 is cylindrical in shape, having a diameter of 3 or 4 inches (7.5 or 10 cm), and is formed of metal or wood. Similarly, the fence post 122 may be formed of any suitable material but in the preferred embodiment are formed of cylindrical pieces of wood.

Turning now to Figure 13, a bottom plan view of the gate post 114 is shown. As can be seen, in the preferred embodiment the vertical portions 126 of the gate post support 124 surround the fence post 122. Furthermore, the vertical portions 126 may be rectangular in shape or, as shown with dash lines 140, the vertical portion of gate post support 124 may be circular in shape.

Turning now to Figure 14, a top view of gate post 76 is shown illustrating support member 136 extending between fence post 122. As further illustrated in Figure 14, the fence material 132 extends around the fence post 132 to which it is attached with fasteners 134, as described above.

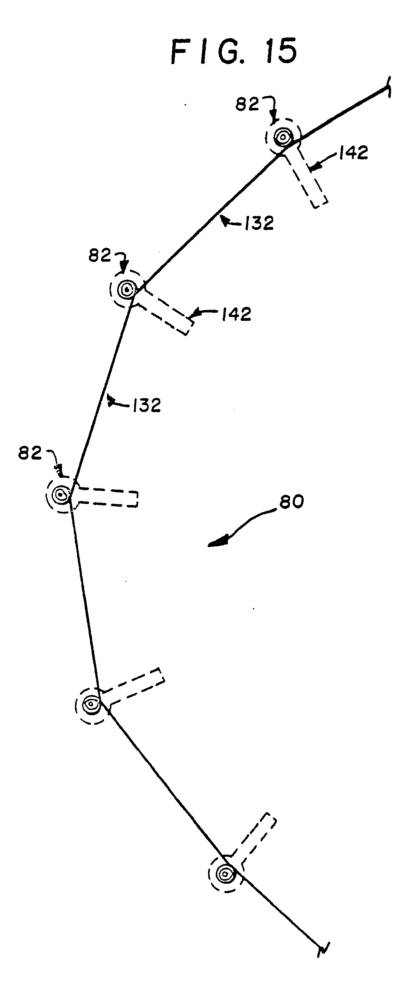

Referring now to Figure 15, the corner post assembly 80 of the preferred embodiment is shown. In the illustrated embodiment, five corner posts 82 are provided at a given corner post assembly 80. In the illustrated embodiment of corner post assembly 80 the fence material 132 extends along the interior of the corner post 82, however, the fencing material 132 may be provided along the exterior of the gate post relative to the enclosed area. As further seen in Figure 15, each of corner posts 82 is provided with a foot portion 142, shown in dashed lines, which extends inwardly relative to the fence line. The foot portion 142 secures and stabilizes the associated corner post 82 as will hereinafter be described.

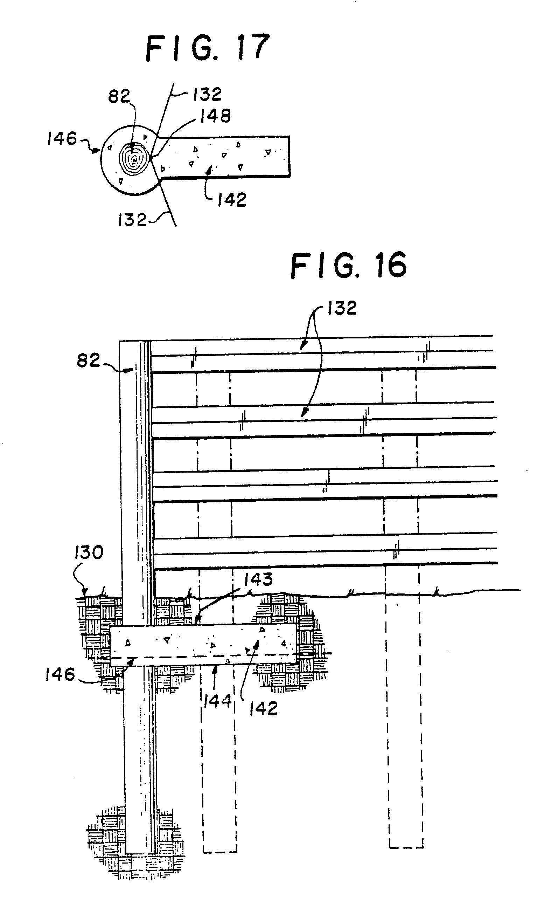

Figure 16 shows a side view of the corner post 82 and foot portion 142 of the preferred form of the present invention. As can be seen, corner post 82 is preferably disposed in the ground so that one-half of its length is disposed below the surface 130 of the ground and one-half its length is provided above the surface 130 of the ground. Foot portion 142 extends about corner post 82 and along at least a portion of the submerged length thereof. In the preferred embodiment, the foot portion 142 has its upper most surface 143 disposed 6 inches (15 cm) below the surface 130 of the ground and has a length such that the lower most portion thereof 144 is disposed beneath the frost line 146 shown in dotted lines in Figure 16. Additionally, in the preferred embodiment, the foot portion 142 is formed from concrete. As can be seen in Figures 16 and 17, foot portion 142 preferably extends horizontally inwardly relative to the corner post 82 and mounted fencing material 132. The footing portion 142 so disposed provides stability and support for corner post 82 as will be described more fully hereinafter. As will also become more apparent, the foot portion 142, while illustrated as being a generally horizontal block, may be oriented at any angle that will tend to resist an inward force applied to the corner post 82. As can be seen in Figure 17, each of the corner posts 82 is further provided with bracket means 148 for slidably mounting the fencing material 132 thereto. Moreover, a support member 136 of the type shown in Figure 12 may be utilized to provide additional stability and support.

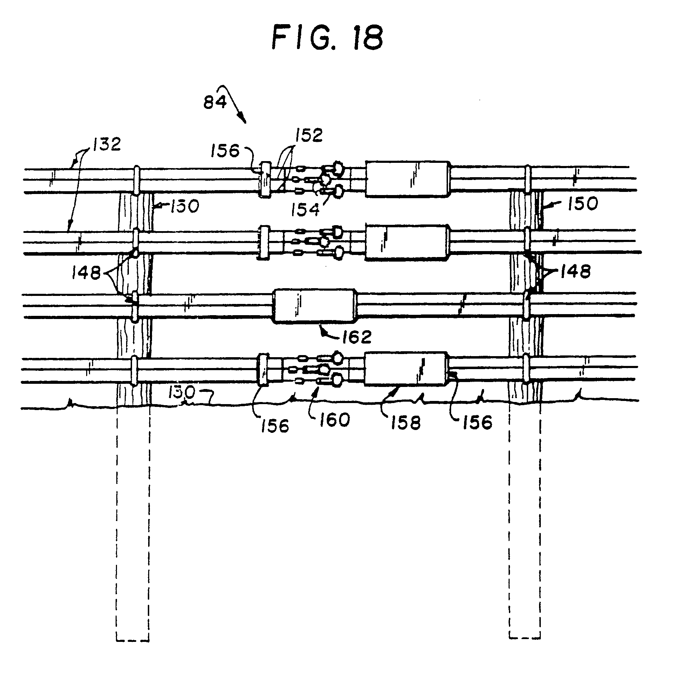

Referring now to Figure 18, the tensioning assembly 84 of the fence line layout 70 is shown. The tensioning assembly 84 is preferably provided between two adjacent fence posts 150. Again, each of the fence posts 150 is preferably provided so that approximately one-half of its length is provided below the surface 130 of the ground, as shown in dashed line, and one-half of its length is provided above ground. Furthermore, fencing material 132 is slidably coupled to fence posts 150 with bracket means 148. In the illustrated embodiment, four lines of fencing material 132 are provided with each of the lines of fencing material 132 being slidably coupled to fencing posts 150 with a bracket means 148.

The tensioning assembly 84 includes a tensioning means 160 provided along each of the fencing material lines 132. Each of the tensioning means 160 includes ratchet means 154 which are provided along each of the wires or fibers 152 provided in the fencing material 132. The ratchet means 154 are provided to tension the respective wire or fiber 152 so as to pull the fence material 132 into a taut relation about the fence line layout.

The tensioning assembly 84 further includes cover means 162 which are provided about each of the tensioning means 160. Each of the cover means 162 includes, preferably, first and second end portions 156 and a central portion 158 which may be coupled together. The first and second portions 156 of the cover means 162 are each provided with suitable apertures (not shown) to enable the first and second end portions 156 to be slidably received on the fencing material 132. The apertures provided in the cover means are of such a size that, while enabling sliding movement, they prevent excessive moisture or insects, such as bees, from entering the closed cover means 162. Thus, the cover means 162 not only protects the tensioning means 160 from corrosion and weathering, but also protects those persons accessing the ratchet means 154 from harmful insects that would otherwise nest within the cover means 162.

Turning now to the method by which the fence line layout of the present invention is assembled and utilized, as shown in Figure 11 a plurality of fence posts 72 are provided in an array surrounding an area to be enclosed. A gate post 76 including fence posts 122 and gate post support 124 are provided on either side of those portions of the fence line layout 70 where, if desired, a gate or opening is provided. Furthermore, specialized corner posts 82 with associated footing portions 142 are provided along those portions of the fence line layout that deviate substantially from a straight line. A plurality of lengths of fencing material 32 are then fastened by appropriate fastening means 134 to a fence post 22 in the fence line layout 70. The lengths of fencing material 132 are then aligned with each of the fence posts 72 corner posts 82 and posts 150 adjacent the tensioning means 160, the fencing material being slidably coupled to each of the posts 72, 82 and 150, respectively, with bracket means 148. At the location of the tensioning means 160, the plastic material of the fencing material 132 is interrupted so as to expose the wires or fibers 152 in the fencing material 132. Each of the exposed wires or fibers 152 on each length of fencing material 132 are coupled to a ratchet means 154. The ratchet means 154 enable the wires or fibers 152 of each length of fencing material 132 to be placed under a great degree of tension so as to pull the fencing material into a taut configuration about the fence line layout 70 The high degree of tension applied to each length of fencing material and the slidable attachment of the fence material 132 to the fence posts 72, 83 and 150 enable a firm and sturdy fence line layout 70 to be formed whereby any distortion of the fence line material 132 caused by enclosed livestock or caused by other contact will be absorbed by the remainder of the fence material 132 disposed about the perimeter of the enclosure as defined by the fence line layout 70. The ratchet means 154, after being adjusted so as to pull the fence material 132 into a tensioned relation, are covered by the cover means 162 to protect same from tampering or corrosion. The foot portions 142 of the corner posts 82 being disposed inwardly relative to the corner posts 82 and fence material 132, serve to secure and retain the corner posts 82 in upright fashion by resisting the inward pull exerted thereon when said ratchet means 154 are utilized to tension the wires or fibers 152 and when enclosed livestock or other contact generate a force on the fencing material.

While the fence line layout of the present invention has been described as preferably defining an enclosure, it is clear that the advantages of the disclosed fence line could also be employed in forming elongated barriers.

While the present invention has been shown and described in terms of what is regarded presently as its most practical embodiments, many alterations may be made to the subject invention without departing from the scope thereof as defined in the claims which follow.

## Claims

1. A fence system comprising:

    at least one corner post assembly, each said corner post assembly (80) comprising at least one corner post member (80), each corner post member including a fence post adapted to be partially implanted in the ground, and a foot portion (142) adapted to be coupled to the fence post;

    optionally at least one gate post assembly (74), each gate post assembly comprising first and second gate post members (76), each gate post member including at least one fence post (122) adapted to be partially implanted in the ground, and a gate post support (124);

    at least one elongate length of flexible fencing (132) comprising a plastic coated high tensile wire or fibre,

    means for coupling each of said at least one lengths of flexible fencing material at each end thereof to a gate post member or to a fence post (122) and means (148) for slidably coupling the flexible fencing material to at least one of the said corner post members (80); and

    at least one tensioning means (84), for tensioning each of said at least one lengths of fencing material, provided on each length of flexible material (132),

    whereby the fencing material (132) may be tensioned between the coupled ends thereof, characterised in that the foot portion (142) of each said corner post member extends generally horizontally in the ground and is orientated at an angle such as to resist an inward force applied to the corner post thereby to maintain its respective fence post (82) in a substantially upright disposition against the force exerted thereon from the tensioned fencing material (132).

2. A fence system as claimed in Claim 1, wherein the flexible fencing material (132) includes an elongate web of plastic having spaced, substantially parallel edges along its length and a substantially flat web portion, each edge having an enlarged cross section relative to said web portion and encasing a wire of fibre and each wire or fiber lying substantially in the plane of the web.

3. A fence system as claimed in Claim 1 or Claim 2 wherein the said foot portion (142) is implanted in the ground, is coupled to the implanted portion of its respective fence post (82) and extends horizontally therefrom from about 6 inches (15 cm) below the surface of the ground, and at a depth at least a depth below the frost line.

4. A fence system as claimed in any one of claims 1 to 3 wherein the said foot portion (142) is formed from concrete.

5. A fence system as claimed in any one of claims 1 to 4 including a gate post support which includes a vertical portion (126) coupled to the implanted portion of each fence post (122) of each gate post member and extends from about 6 inches (15 cm) below the surface of the ground to at least a depth below the frost line.

6. A fence system as claimed in Claim 5 wherein each gate post member (76) includes at least two fence posts (122) and wherein the gate post support includes at least one portion that extends horizontally between adjacent vertical portions thereof.

7. A fence system as claimed in Claim 6 wherein the said gate post support (124) is formed from concrete and the gate post member (114) further includes a support member (136) which extends, above ground, between the two said fence posts.

8. A fence system as claimed in any one of claims 1 to 7 wherein each length of fencing material (132) includes a portion where the plastic material is interrupted so as to expose the wires or fibers provided therein, and wherein the tensioning means (84) is provided at the interrupted portions and is coupled to the said wires or fibers.

9. A fence system as claimed in any one of claims 1 to 8 wherein the tensioning means (84) includes rachet means coupled to each of the said wires or fibers.

10. A fence system as claimed in any one of claims 1 to 9 wherein a plurality of the said elongate lengths of flexible material (132) are provided at vertically spaced intervals on each gate post member or fence post.

11. A fence system as claimed in any one of claims 1 to 10 wherein the said corner post assembly (80) and optional gate post assembly (74) are partially implanted in the ground, and including a plurality of further fence posts (72), disposed in an array so as to define an area to be enclosed.

12. A fence system as claimed in Claim 11 wherein the array of fence posts includes at least one substantially straight line portion, a corner post assembly being provided at least at each end of each straight line portion.

13. A fence system as claimed in Claim 12 wherein the array of fence posts includes four straight line portions and four corner post assemblies, each corner post assembly being disposed between the ends of adjacent straight line portions.

14. A method of forming a fence line layout comprising:

providing a plurality of corner post assemblies and optionally gate posts and fence posts as defined in any one of claims 1 to 13, partially implanted in the ground, so as to form an array;

providing at least one elongate length of flexible fencing material as defined in any one of the preceding claims

coupling each of the at least one lengths of flexible material at each end thereof to a gate post member, or to a fence post, and slidably coupling each length of fencing material to the fence posts forming the array;

providing at least one tensioning means, for tensioning each length of fencing material, and

tightening the tensioning means so as to pull each length of fencing material into a taut relation about the fence line array, whereby said foot portions maintain each corner post member in an upright disposition against the force applied thereto by tensioning the fencing material.

**Revendications**

1. Système de clôture comprenant:

au moins un ensemble de poteax d'angle, chaque ensemble de poteaux d'angle (80) comprenant au moins un élément poteau d'angle (80), chaque élément poteau d'angle comprenant un poteau de clôture destiné a être implanté partiellement dans la sol et une partie formant pied (142) destinée a être raccordée au poteau de clôture;

facultativement au moins un ensemble de poteaux de barrière (74), chaque ensemble de poteaux de barrière comprenant des premier et second éléments poteaux de barrière (76), chaque élément poteau de barrière comprenant au moins un poteau de clôture (122) destiné a être implanté partiellement dans la sol et un support de poteau de barrière (124);

au moins une longueur de matériau flexible de clôture (232) de forme allongée, constituée par une fibre ou un fil métallique à haute résistance à la traction revëtu de matière plastique;

des moyens pour fixer chacune desdites longueurs de matériau flexible de clôture, par chacune de ses extrémitès, à un élément poteau de barrière ou à un poteau de clôture (122) et des moyens pour raccorder à glissement le matériau flexible de clôture à l'un au moins desdits éléments poteaux d'angle (80); et

au moins un moyen tendeur (84) prévu sur chaque longueur de matériau flexible (132) pour tendre chacune desdites longueurs de matériau de clôture de telle sorte que le matériau de clôturé (132) puisse être tendu entre ses extrémités fixées,

caractérise en ce que la partie formant pied (142) de chacun desdits éléments poteaux d'angle s'étend en gros horizontalement dans la sol et est orientée dans une direction angulaire qui lui permet de résister a une force exercee vers l'intérieur sur le poteau d'angle, de façon à maintenir la poteau de clôture (82) qui lui est associé dans une disposition pratiquement verticale, contre la force exercée sur lui par le matériau de clôture (132) tendu.

2. Système de clôture selon la revendication 1, dans lequel le matériau flexible de clôture (132) comprend une bande de forme allongée de matière plastique, présentant des bordures espacées, sensiblement parallèles le long de sa longueur et une partie de bande plate, chaque bordure ayant une section transversale agrandie par rapport à ladite partie de bande et enrobant un fil métallique ou une fibre, chaque fil métallique ou fibre étant situé pratiquement dans le plan de la bande.

3. Système de clôture selon la revendication 1 ou 2, dans lequel ladite partie formant pied (142) est enterrée dans le sol, est raccordée à la partie implantée du poteau de clôture (82) qui lui est associé et s'étend horizontalement à partir de celui-ci entre 15cm (8 pouces) au-dessous de la surface du sol et une profondeur située au moins en dessous de la limite de gel.

4. Système de clôture selon l'une quelconque des revendications 1 & 3, dans lequel ladite partie formant pied (142) est faite de béton.

5. Système de clôture selon l'une quelconque des revendications 1 & 4, comprenant un support de poteau de barrière qui comprend une partie verticale (126) raccordée à la partie implantée de chaque poteau de clôture (122) de chaque élément poteau de barrière et qui s'étend entre 15 cm (6 pouces) au-dessous de la surface du sol et une profondeur située au moins en dessous de la limite de gel.

6. Système de clôture selon la revendication 5, dans lequel chaque élément poteau de barrière (76) comprend au moins deux poteaux de clôture (122), et dans lequel le support de poteau de barrière comprend au moins une partie qui s'étend horizontalement entre des parties verticales voisines.

7. Système de clôture selon la revendication 6, dans lequel ledit support de poteau de barrière (124) est fait de béton, et en ce que l'élément poteau de barrière (114) comprend en outre un élément de support (136 )qui s'étend, au-dessus du sol, entre lesdits deux poteaux de clôture.

8. Système de clôture selon l'une quelconque des revendications 1 à 7, dans lequel chaque longueur de matériau de clôture (132) comprend une partie où la matière plastique est interrompue de façon à mettre à nu les fils métalliques au fibres qui s'y trouvent, et danslequel les moyens tendeurs (84) sont disposés au niveau des parties interrompues et sont raccordés auxdits fils métalliques ou fibres.

9. Système de clôture selon l'une quelconque des revendications 1 à 8, dans lequel les moyens tendeurs (84) comprennent moyens à cliquet raccordés à chacun desdits fils métalliques ou fibres.

10. Système de clôture selon l'une quelconque des revendications 1 à 9, dans lequel il est prévu plusieurs desdits longuers de matériau flexible de forme allongée (132), à intervalles espacés verticalement sur chaque élément poteau de barrière ou sur chaque poteau de clôture.

11. Système de clôture selon l'une quelconque des revendications 1 à 10, dans lequel ledit ensemble de poteaux d'angle (80) et ledit ensemble facultatif de poteaux de barrière (74) sont implantés p[artiellement dans le sol, la système comprenant une multiplicité d'autres poteaux de clôture (72), disposés en une rangés de façon à délimiter un terrain à clôturer.

12. Système de clôture selon la revendication 11, dans lequel la rangée de poteaux de clôture comprend au moins une partie en ligne sensiblement droite, un ensemble de poteaux d'angle étant prévu au moins a chaque extrémité de chaque partie en ligne droite.

13. Système de clôture selon la revendication 12, dans lequel la rangés de poteaux de clôture comprend quatre parties en ligne droite et quatre ensembles de poteaux d'angle, chaque ensemble de poteaux d'angle étant disposé entre les extrémités de deux parties en ligne droite adjacentes.

14. Procédé de formation d'un tracé de ligne de clôture, comprenant les opérations consistant;

à mettre en place plusieurs ensembles de poteaux d'angle et éventuellement des poteaux de barrière et des poteaux de clôture tels que définis dans l'une quelconque des revendications 1 à 13, implantés partiellement dans le sol, de manière à former une rangée:

à mettre en place au moins une longueur de matériau flexible de clôture de forme allongée telle que définie dans l'une quelconque des revendications précédentes;

à fixer chacune desdites longueurs de matériau flexible, par chacune de ses extrémités, à un élément poteau de barrière ou à un poteau de clôture, et à raccorder à glissement chaque longueur de matériau de clôture aux poteaux de clôture formant la rangée;

à mettre en place au moins un moyen tendeur, pour tendre chaque longueur de matériau de clôture, et

à serrer les moyens tendeurs pour exercer sur chaque longueur de matériau de clôture une traction qui la tend autour de la rangée de ligne de clôture, lesdites parties formant pied maintenant chaque élément poteau d'angle en position verticale contre la force exercée sur cet élément par la mise en tension du matériau de clôture.

**Patentansprüche**

1. Zaunsystem mit:
zumindest einer Eckpfostenanordnung, wobei jede Eckpfostenanordnung (80) zumindest ein Eckpfostenglied (80) aufweist, jedes Eckpfostenglied einen Zaunpfosten, der geeignet ist, teilweise in den Boden eingesetzt zu werden, und einen Fußteil (142), der mit dem Zaunpfosten gekoppelt werden kann, umfaßt;
wahlweise zumindest einer Tor- bzw. Gatter-Pfostenanordnung (74), wobei jede Gatter-Pfostenanordnung erste und zweite Tor- bzw. Gatter-Pfostenglieder (76) aufweist, jedes Gatter-Pfostenglied zumindest einen Zaunpfosten (122), der teilweise in den Boden eingesetzt werden kann, und eine Gatter-Pfosten-Abstützung bzw. -Stütze (124) umfaßt;
zumindest einem langgestreckten Längenstück eines flexiblen Zaunmaterials: (132), welches einen mit Kunststoff beschichteten hochzugfesten Draht oder eine solche Faser umfaßt,
Mitteln zum Verkoppeln jedes der zumindest einen Längenstücke flexiblen Zaunmaterials an jedem Ende von diesen an einem Gatter-Pfostenglied oder einem Zaunpfosten (122) und Mitteln (148), um das flexible Zaunmaterial mit wenigstens einem der Eckpfostenglieder (80) gleitfähig zu verkoppeln und
zumindest einer Spanneinrichtung (84) an jedem Längenstück des flexiblen Materials (132) zum Spannen jedes der zumindest einen Längenstücke des Zaunmaterials, so daß das Zaunmaterial (132) zwischen seinen gekoppelten Enden gespannt werden kann, dadurch **gekennzeichnet,** daß der Fußteil (142) jedes Eckpfostengliedes sich im allgemeinen horizontal im Boden erstreckt und unter einem Winkel in der Ebene des Bodens derart ausgerichtet ist, daß einer an den Eckpfosten angreifenden, einwärts gerichteten Kraft Widerstand entgegengesetzt wird und dadurch dessen zugeordneter Zaunpfosten (82) in einer im wesentlichen aufrechten Disposition bzw. Anordnung gegen die auf diesen von dem gespannten Zaunmaterial (132) ausggeübte Kraft gehalten wird.

2. Zaunsystem nach Anspruch 1, bei welchem das flexible Zaunmaterial (132) ein langgestrecktes Kunststoffnetz mit auf Abstand voneinander angeordneten, im wesentlichen parallelen Kanten entlang seiner Länge und einem im wesentlichen flachen Bahn- bzw. Netz-Abschnitt umfaßt, wobei jede Kante einen vergrößerten Querschnitt im Verhältnis zum Netz-Abschnitt aufweist und einen Draht oder eine Faser ummantelt und jeder Draht oder jede Faser im wesentlichen in der Ebene des Netzes liegt.

3. Zaunsystem nach Anspruch 1 oder 2, bei welchem der Fußteil (142) in den Boden eingesetzt und an den eingesetzten Teil seines zugeordneten zaunpfostens (82) angekoppelt ist und sich horizontal von diesem von circa 15 cm (6 inches) unter der Oberfläche des Bodens und in einer Tiefe zumindest unter der Frostgrenze erstreckt.

4. Zaunsystem nach einem der Ansprüche 1 bis 3, bei welchem der Fußteil (142) aus Beton hergestellt ist.

5. Zaunsystem nach einem der Ansprüche 1 bis 4 mit einer Tor- bzw. Gatterpfostenstütze, die einen vertikalen Teil (126) umfaßt, der mit dem eingesetzten Teil jedes Zaunpfostens (122) jedes Gatter-Pfostengliedes verkoppelt ist und sich von circa 15 cm (6 inches) unter der Oberfläche des Bodens bis zumindest zu einer Tiefe unter der Frostgrenze erstreckt.

6. Zaunsystem nach Anspruch 5, bei welchem jedes Gatter-Pfostenglied (76) zumindest zwei Zaunpfosten (122) umfaßt und die Gatter-pfostenstütze zumindest einen Teil aufweist, der sich horizontal zwischen benachbarten vertikalen Abschnitten von diesen erstreckt.

7. Zaunsystem nach Anspruch 6, bei welchem die Gatter-Pfostenstütze (124) aus Beton gebildet ist und das Gatter-Pfostenglied (114) weiterhin ein Stützglied (136) umfaßt, welches sich über dem Boden zwischen den zwei Zaunpfosten erstreckt.

8. Zaunsystem nach einem der Ansprüche 1 bis 7, bei welchem jedes Längenstück des Zaunmaterials (132) einen Abschnitt umfaßt, wo das Kunststoffmaterial unterbrochen ist, so daß die darin vorgesehenen Drähte oder Fasern freigelegt sind, und bei welchem die Spanneinrichtung (84) an den unterbrochenen Abschnitten vorgesehen und mit den Drähten oder Fasern gekoppelt ist.

9. Zaunsystem nach einem der Ansprüche 1 bis 8, bei welchem die Spanneinrichtung (84) eine Rast- bzw. Ratsch- bzw. Klinkeneinrichtung umfaßt, die mit jedem der Drähte oder Fasern gekoppelt ist.

10. Zaunsystem nach einem der Ansprüche 1 bis 9, bei welchem eine Mehrzahl der langgestreckten Längenstücke des flexiblen Materials (132) in vertikal mit Abstand voneinander angeordneten Intervallen an jedem Gatter-Pfostenglied oder Zaunpfosten vorgesehen ist.

11. Zaunsystem nach einem der Ansprüche 1 bis 10, bei welchem die Eckpfostenanordnung (80) und die wahlweise Gatter-Pfostenanordnung (74) teilweise in den Boden eingesetzt sind, und welches eine Vielzahl von weiteren Zaunpfosten (72) umfaßt, die in einer Aufreihung bzw. Anordnung zur Umgrenzung eines zu umschließenden Bereiches angeordnet sind.

12. Zaunsystem nach Anspruch 11, bei welchem die Anordnung von Zaunpfosten zumindest einen im wesentlichen geradlinigen Abschnitt aufweist, wobei eine Eckpfostenanordnung zumindest an jedem Ende jedes geradlinigen Abschnittes vorgesehen ist.

13. Zaunsystem nach Anspruch 12, bei welchem die Anordnung von Zaunpfosten vier geradlinige Abschnitte und vier Eckpfostenanordnungen umfaßt, wobei jede Eckpfostenanordnung zwischen den Enden aneinandergrenzender geradliniger Abschnitte angeordnet ist.

14. Verfahren zur Bildung eines Zaunlinien-Layouts, bei welchem:
eine Vielzahl von Eckpfostenanordnungen und wahlweise Tor- bzw. Gatterpfosten und Zaunpfosten, wie sie in einem der Ansprüche 1 bis 13 definiert sind, teilweise in den Boden eingesetzt wird, um eine Anordnung zu bilden;
zumindest ein langgestrecktes Längenstück eines flexiblen Zaunmaterials, wie es in einem der vorhergehenden Ansprüche definiert ist, vorgesehen wird,
jedes der Zumindest einen Längenstücke an flexiblem Material an jedem seiner Enden mit einem Gatterpfostenglied oder einem Zaunpfosten verkoppelt wird und jedes Längenstück des Materials an den die Anordnung bildenden Zaunpfosten gleitbar bzw. verschiebbar verkoppelt wird,
zumindest eine Spanneinrichtung zum Spannen jedes Längenstücks am Zaunmaterial vorgesehen wird und
die Spanneinrichtung angezogen wird, um jedes Längenstück am Zaunmaterial in eine gespannte Beziehung um die Zaunlinienanordnung zu Ziehen, wobei die Fußabschnitte jedes Eckpfostengliedes in einer aufrechten Disposition bzw. Stellung gegen die an diese durch das Spannen des Zaunmaterials angelegte Kraft halten.

FIG. 1

FIG. 2

FIG. 3

FIG. 4

FIG. 5

FIG. 6

FIG. 7

FIG. 8

FIG. 9

FIG. 10

FIG. II

EP 0 255 213 B1

# FIG. 14

# FIG. 12

# FIG. 13

17

# F I G. 15

# FIG. 17

# FIG. 16

## FIG. 18